# EUROPEAN PATENT APPLICATION

(11) **EP 0 811 317 A2**
(43) Date of publication of application: **10.12.1997**
(21) Application number: 97201686.9
(22) Date of filing: 07.06.1997
(51) Int. Cl.: A01G 9/24, E06B 9/52

(54) **Insect protector net**

(30) Priority: 08.06.1996 NL 1003304
(71) Applicant: Leen Huisman B.V., 2676 ZH Maasdijk (NL)
(72) Inventor: Van Staalduinen, Martinus Maarten, 2676 ZH Maasdijk (NL)

(57) **Abstract**

The present invention relates to a screen arrangement (4), e.g. to cover, with an air permeable screen the ventilation aperture of a ventilation part, moveable between a closed position and an opened position, such as a ventilation panel or window of a building, in particular a greenhouse, of which the screen is provided with at least one elongated reinforcement element. The reinforcement element (11) is produced with an open section (18, 26, 28, 29) showing at least one, largely enclosed room (19, 20), wherein the screeen (6) is at least partly accomodated, and at which the screen and reinforcement element (11) are mutually connected by means of clamping.

## Description

The present invention relates a.o. to a screen arrangement e.g. to cover, with an air permeable screen the ventilation aperture of a ventilation part, moveable between a closed position and an opened position, such as a ventilation panel or window of a building, in particular a greenhouse, of which the screen is provided with at least one elongated reinforcement member.

Such an arrangement is known from the Dutch patent application (Terinzagelegging) no. 9202011 in the name of applicant. In the known screen arrangement, rods are incorporated for providing stability or stiffness and shape to the screen, and to, to some extent, relieve same from influences of wind. Moreover, this has the advantage that the screen can also at closing of the screen arrangement be folded to a small package, and can be received in a correct way and compactly in a trough shaped, to be covered box. A suchlike closing of the arrangement has the advantage for the relevant building, that the incidence of light is not limited by hanging or flapping screen, and prevents the screen from getting damaged by contact with rough constructional parts of the building, or that it gets pinched between upper and lower edge of the screen arrangement. The known construction in practice, however, suffers from the fault that the screen at the point of the rods after some time may show tears, owing to which the insect excluding or insect including function of the screen gets lost. Moreover, the manufacturing of such a screen is, in relation to the necessarily application of hems or loops in the screen, relatively time consuming and costly. The present invention has a.o. for its object to provide a screen arrangement which in practice is reliable at least during relatively long time, and which can relatively advantageously be produced. According to the invention, this is achieved with a construction wherein the reinforcement element is produced in an open section which comprises at least one largely enclosed room in which the screen is at least locally accomodated in, and at which the screen and reinforcement element are mutually connected by means of clamping.

A suchlike construction is suited particularly for screen arrangements which, such as the known construction, have an accordion profile and is, also according to the invention, more generally suited for e.g. applications, wherein it is desirable to shape or reinforce an indiscriminate screen either or not with a plurality of rods.

The construction according to the invention has the advantage that screen parts in the position of the corners of an accordion-profile, i.e. at the position of the, with respect to the screen heavy reinforcement elements, mutually do not directly contact each other, owing to which the chance of wear, and likely through that the chance of tearing, is taken away, at least strongly reduced. The invented construction moreover takes away the necessity of making a costly hem or loop in the screen. At the same time, vis à vis the known tube and rodlike stiffening, the open profile of the reinforcement element is relatively advantageous to produce, yet remaining limited in it's weight.

In a preferred embodiment the screen and the reinforcement element are mutually connected under clamping in a filling body or filler such as a monofilament. This has the advantage that clamping in of the screen may be realized faster and better, without danger of tearing of the screen or of adverse mutual displacement of threads of the fabric. In a further improvement according to the idea underlying the invention the clamping of the screen is at least also realized through local deformation of the profile. A such deformation is at elements produced of metal obtained preferably by pinching together the edges of the profile, and at elements produced in artificial material by heating, either or not with simultaneous exercise of pressure. Local deformation advantageously secures the connection between screen and reinforcement element. According to the invention the filler preferably is continuously, i.e. made of one piece. Particularly in combination with clamping by local deformation, this has the advantage that the chance of the screen going out of the profile is minimal.

A particular aspect, resulting from the above described way of securing, relates to gauze or netting fabric intended for application as insect screen, which gauze comprises an at least as filler applicable thread of appreciable larger thickness than gauze parts bordering the thread. A such gauze has the advantage that the manipulations at producing the screen arrangement are reduced and simplified, whereas the costs of a such gauze are relatively only moderately increased when factory produced. It is remarked that amongst others from the international patent publication WO 93/03214 a gauze is known in which a relatively thick thread is woven compared to the fabric. A thread is per fabric part locally considerably longer than the fabric part in which it is received, as seen in the lengthwise direction of the thread, so that the thread forms loops which are to be threaded to a control rod of the screen arrangement. The way of application of the gauze disclosed in the said document further considerably differs from way of application aimed at in the present invention which enables an accordion-like folding and unfolding of the screen.

A further aspect of the inventing concerns a screen arrangement with at least two reinforcing elements provided at the outerside of the accordion profile, which are mutually connected by at least one flexible, strain loadable distance element of smaller length than of the fabric in between the reinforcement elements, as measured at right angles to the longitudinal direction of a reinforcement element. A such screen arrangement has the advantage relatively to the screen arrangement e.g. known from Dutch patent application 9202011, that reinforcement members can be saved at the inner edges of the accordion profile, so that the screen arrangement becomes lighter and cheaper, while the gauze, through the in this respect obstructing presence of a distance element has no possibility of displacement or bulging beyond the outer side of the accordion profile. A such construction in this way economically and simply renders a reliable possibility for folding the screen as a small package. In a particular embodiment the distance element is embodied by a strap of a width of at least 5 mm. Application of strap has the advantage that the folding direction is determined to a large degree, while a flat, foldable, yet firm distance element is obtained. The largely determined folding direction of the strap leads to it, particularly in application with relative small mutual distance, that at folding in of the arrangement, the gauze in between two reinforcement members is urged in the desired inward direction. A further securing of this effect is obtained when the strap is given a sharp crease.

Accordingly, yet another particular aspect of the invention concerns a gauze intended for application as insect screen, such as the insect proof surrounding of ventilation aperture in buildings such as greenhouses, in which the gauze comprises at least one strap of a width of the present example of about 5 mm. A such gauze has the advantage that factory produce thereof brings along relatively few extra costs, whereas the production of the screen arrangement becomes strongly simplified and economized. It is remarked that from the international patent publication WO 93/03214 there is known an insect fabric in which under formation of attachment loops, a relative thick thread is incorporated as compared to the fabric. The fabric according to the present invention distinguishes itself from this by the specific dimensions of the strap, which has a desired, to a great extent predetermined folding direction. According to the invention the strap at this is positioned with a flat side against the plant of the fabric. More in particular the fabric according to the invention distinguishes itself by the locally smaller length of the strap vis à vis the underlying fabric when measured in the same direction.

Hereinafter, the invention is further explained with reference to a non limiting illustrative embodiment, under a reference to the drawing. In that drawing:
figure 1 shows a schematic perspective view of an opened screen arrangement according to the invention, arranged along a ventilation window of a greenhouse or warehouse,
figure 2 shows a cross section of a preferred embodiment of a reinforcement element;
figure 3 shows in a cross section similar to figure 2 a first alternative embodiment of the reinforcement element;
figure 4 and figure 5 show a schematic cross section of alternative embodiments of the reinforcement element according to the invention;
figure 6 shows a detail of the fabric applied in the screen in which according to the invention a filler is incorporated;
figure 7 shows a cross section of a screen with an accordion profile, similar to figure 1, and
figure 8 shows a view according to the line VIII-VIII in figure 7.

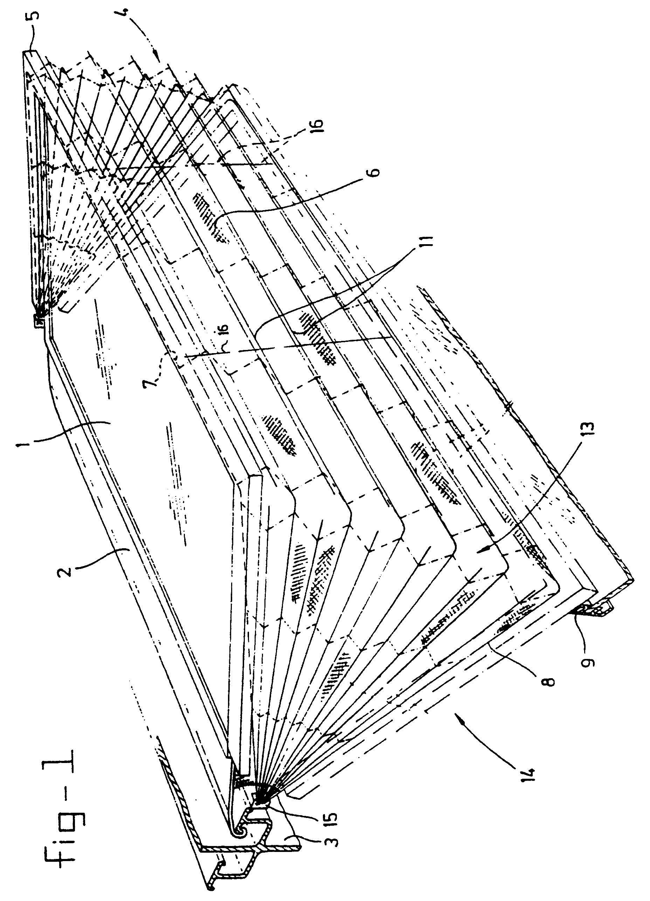

Figure 1 shows, as part of a greenhouse, e.g. a large Dutch-type glasshouse for crop production, a ventilation window 1 which is hinged through section 2 near the ridge section 3 of the greenhouse construction not further detailed here. The greenhouse construction is, for example, of the well-known Venlo-type; a type of greenhouse having rectangular, relatively small-size, usually top-hinged, ventilation windows which are provided in sloping roof parts. Along the outside of the ventilation window 1 there is provided a screen arrangement 4 according to the present invention, which screen arrangement is shown in an opened position. In the embodiment shown, in the plan view the arrangement 4 comprises a U-shaped capping section 5 which is connected with the ventilation window 1, and a fine-meshed gauze screen 6, which is to be referred to as insect screen, which has its upper edge 7 fastened in the capping section 5 and which has its lower edge 8 fastened around the window opening in the greenhouse. In a preferred embodiment, the screen 6 is made of cloth e.g. as is disclosed in the international application WO 93/03214 of which the contents, as far as not directly concerned with the thread D mentioned therein, is considered to be incorporated in the present application, and which in combination with the following improvements, expressly forms part of the present invention. In the preferred embodiment according to the invention, however, a such cloth is accordion-wise included in the screen arrangement 4, i.e. in a cross-sectional view of the arrangement in an opened position, the cloth has a zigzag profile. It is remarked that the present patent application, screen 6 is understood to mean the applied insect-stopping piece of material, as well as the weaving and the material to be referred to as cloth. Wherever there is mention of the outside (outer part) or inside (inner part) of the screen, screen arrangement or accordion profile, such a designation is meant to be with respect to the building in which the same may find application.

For fastening the lower edge 8, the screen arrangement may be provided with a special lower frame section having as well a U-shaped form as seen in plan view. As can be seen from the drawing, the outer part of the capping section 5 has an essentially L-shaped cross section and, at a folded in screen arrangement, this profile 5 lies on the only partly represented glazing rods. As the screen arrangement 4 folds in, the screen 6 folds like an accordion and comes to lie confined under the section 5 so that it is protected against weather influences and against cleaning operations of the roof or the outer wall of the greenhouse.

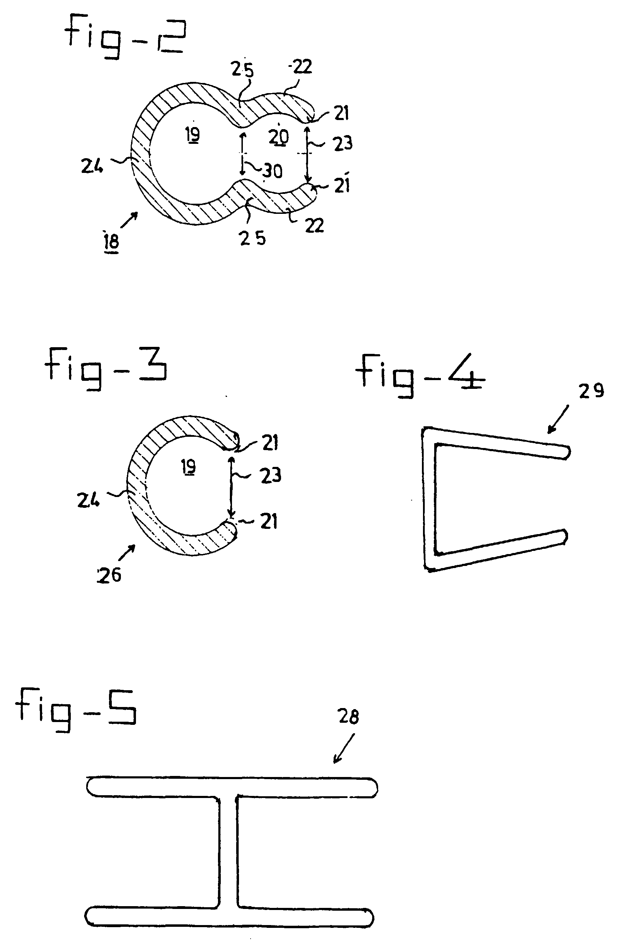

In the screen 6, there are elongated reinforcement members 11 made of metal or synthetic material which are parallel with the lower edge and upper edge 7, 8 and connected with the screen 6, and wherein these form outermost edges of the accordion profile. The reinforcement members 11 continue in the corners 13 of the screen 6 and, for instance, they can have a section 18, 26, 28, or 29, as shown in on of the figures 2-5. At the side faces 14 the reinforcement elements 11 converge in a pivot 15.

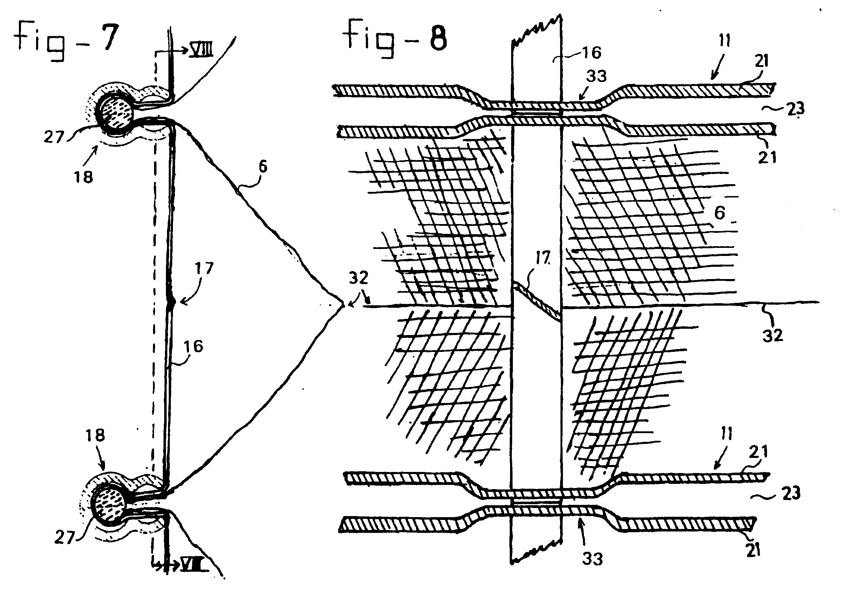

As Figure 1 shows diagrammatically, and as Figures 7 and 8 show in further details, intermediate elements 16, made of a UV-resistant synthetic material which is flexible, but relatively stiff with regard to the screen, each time extend between two reinforcement elements 11. In the present embodiment the intermediate elements form part of a continuous strap. The strap can take the shape of, for instance, a monofilament or a non-vulcanized or vulcanized fabric or plait work. In the shown embodiment, the strap is a circular loom fabric having various textures. The fabric shows at least one widthwise repetition of the pattern, which is herringbone in the present case, and on either side there is provided a special edge protection disposed in opposition. In the depicted embodiment, the thickness is about 0.3 mm, and the width is at least about 6 mm. According to the invention, the material and/or the fabric of the supporting device 16 is chosen such that a sharp crease 17, once made, at the same time results in local permanent deformation. In addition, the tensile strength of the strap is considerably higher than that of the screen 6. In the present screen arrangement 4, each time halfway between two immediately neighbouring reinforcement elements 11, the supporting device 16 is provided with such a crease 17 essentially transverse to the longitudinal direction of the strap that when the arrangement 4 is folded in, the strap tends to assume a V-shaped position, with the V pointing inwards. During folding-up or folding-in the screen arrangement 4, the screen 6 is hereby in a dependable and desired manner urged inwardly into a zigzag profile. In a preferred embodiment, the crease is at an angle of about 45° to the longitudinal direction of the strap.

The cross section in figure 2 shows the preferred profile 18 of the reinforcement element 11. The profile 18 comprises a first, in this embodiment largest and in the embodiment of figure 3 only, largely enclosed space 19, and a second so called enclosed space 20. The second enclosed space 20 borders to rounded end rims 21 of the profile 18, which are part of lips 22. Opposite entrance opening 23, defined as the smallest distance between the end rings 21, the profile 18 has according to the preferred embodiment, an as well rounded off back part 2. The inner side of the profile 18 is each time shaped such that the relevant enclosed space 19, 20 each time has an at least substantially round shape. In the embodiment according to figure 2, to this end a rounded off narrowing part 25 is present between the enclosed spaces 19 and 20. The smallest distance between the opposite narrowing parts 25 defines a supply or entrance opening 30 for the first space 19, when departing from the second space 20. This part 25 is at the outer side of the profile preferably produced receded, such that the profile 18 along its circumference is of a largely equal thickness. By this, in the case that the profile is produced in metal such as aluminum according to the preferred embodiment, the profile remains well deformable, i.e. without cracks, for the purpose of clamping in a screen part 6 as is explained in the following description of figure 3. The entrance opening 30 to the first chamber 19 is smaller than the diameter of the filler 27.

Figure 7 in addition shows a preferred way of connecting between the screen 6 and a reinforcement element. When applied in combination with the profile according to figure 3 the screen 6 is laid over the opening 23 of a still open mainly C-shaped profile as seen in cross section, and subsequently pressed in the enclosed space 19 of the profile 26, together with a thread shaped filler 27. Subsequently the lips 22 of the profile 26 are locally deformed under application of force, preferably pressed together by means of a pair of pincers, through which the screen 6 is clamped between the profile 26 and the filler 27. The profile 26 has, after the described deformation, an enclosed C-shaped profile. In the case of synthetic material, the deformation is according to the invention obtained by means of locally heating the profile 26. The filler 27 is preferably produced as a synthetic monofilament of flexibly stiff nature. The monofilament is preferably threadlike and applied as one piece in a reinforcement element 18, 26. This has the advantage that the screen is well kept in the reinforcement element 11, without the reinforcement necessarily being deformed along its entire length. In a typical connection between a reinforcement element 11 and screen 6, the described deformation 33 need, according to the invention, no more often be provided than at a mutual distance of between half and a whole meter, and each time over a distance of 2 to 5 centimeters. A further reaching conduce of the seating can be obtained by a merely slightly bending of the lips 22 in mutual direction, by means of pressure weels arranged in V-shape. The filler 27 on the one hand needs to be of such thickness that the weaving of the screen 6 is not damaged and that a good clamping is possible in the profile 18, 26 and on the other hand not exceeding such thickness that the entire weight and volume of the reinforcement element and filler 27 becomes inacceptable for use in a screen arrangement as described. An optimal diameter of the monofilament more or less matches, or is only slightly smaller than the entrance opening 23, so that filament 27 and screen can relatively simple be introduced in the first room 20. In the embodiment according to the example the diameter lies between 2 and 3.5 mm, and preferably is 3 mm.

The preferred rounded shape of a back part 24 has according to the invention the advantage that section parts close to the entrance opening 30 may give way easily. This has the advantage that a monofilament having a diameter larger than the entrance opening 30 can be applied, through which the number of local deformations 33 or manipulations for further clamping of the profile can be kept minimal. More in particular, the profile according to figure 2, relatively to the profile 26 according to figure 3, has the advantage that the narrowing parts 25 at introducing the monofilament 27 constitute a funnel, catching the filler 27. Through such catchment the filler 27, can according to the invention simply be introduced in the first chamber 19 by means of a pressure weel. This already creates a fairly sufficient clamping connection between screen 6 and reinforcement element 11.

The preferred profile 18 is preferably accommodated such in the screen arrangement 4, that the largest space 19 relative to the building is mainly situated near the outer side, whereas the smaller room 20 largely at the inner side. The corners or bends in the screen arrangement 4 are constituted by connecting elements 31, here constituted by rectangularly bend rod or tube parts having an outer diameter corresponding at least merely with the diameter of room 19, and which are provided therein through introduction in longitudinal direction of the reinforcement element 11. The clamping is obtained either through slight tightening of the section 18 in advance, or through application of rods having a slightly larger diameter. In case of synthetic rods the attachment may be obtained by locally melting together of connection element and profiles. When rod or tube-like connecting elements 31 are applied these are introduced before the connection between the relevant reinforcement element and the screen 6 takes place. In an alternative embodiment the connecting elements are glued together. This in particular finds its application in an alternative embodiment according to the invention wherein the connecting elements applied in the corners are produced flat and are attached against a back or cheek part of a profile.

At the spot of a such corner the relevant ends of two mutually connected reinforcement elements are at mutual distance and the screen and filler are locally provided in the second room 20, present at the inner side of the corner. This has the advantage that the screen 6 also in corners and bends remains at the inner side of the reinforcement element 11, which means the maintaining preservation of a compact and safe storing possibility. The rod or tube-like part applied as connecting elements 31 preferably have an outer diameter which may fittingly or slightly clamping be received in the first room 19. in a preferred embodiment between 4 and 5 mm. The difference in diameter between both rooms 19 and 20 guarantees at application of the connecting elements a secure hit and rapid manufacturing. A good clamping of the screen 6 and the monofilament 27 are achieved in the first room 19 by application of deformation means in the vicinity of section part 25. According to the invention this guarantees sufficient deformation of the section part around the room 19 for a connection with the screen 6 and filler 27.

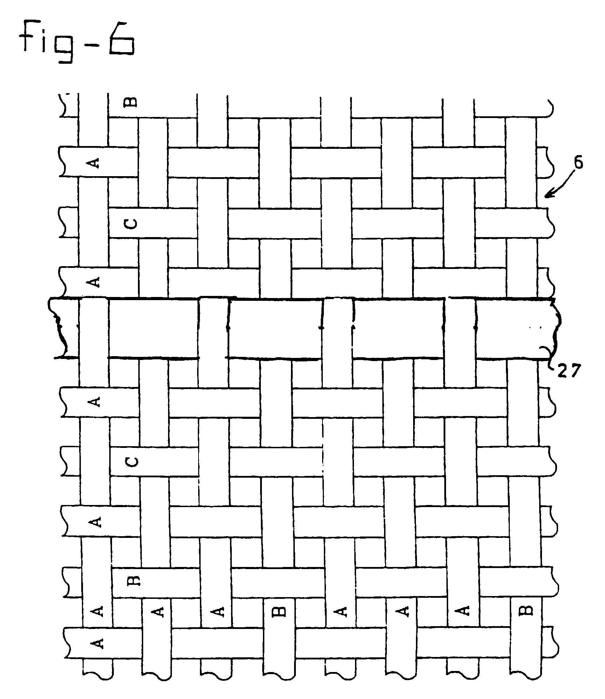

Figure 6 shows in detail a weaving or fabric for a screen 6, in which according to the invention filler 27 and fabric are integrated, i.e. in which the filler 27 during fabrication of the screen is incorporated or received in the weaving, either as warp, or as weft. A such screen is manufacturingwise easy to produce and also simplifies and lowers the cost of the production of screen arrangements.

Figures 7 and 8 show the way in which the intermediate elements 16 relieve the screen 6 largely of its own weight and the weight of the reinforcing members, and the way in which the screen 6, using reinforcing members 11 which are exclusively provided on the outer side of the screen 6, also preserves its zigzag profile in a folded-out position. The intermediate element 16 extends vertically, at least parallel to either a warp or a woof, and is, together with the screen 6, and the filler 27, and situated in between the screen 6 and the inner wall of a section 18, 26, 28 or 29, connected with a reinforcement element 11, in the described manner. The intermediate element 16 keeps the reinforcing members 11 at such, an immaculately regular mutual distance, that in an opened screen arrangement there can be slack in the screen 6 between two reinforcing members 11, i.e. it is not subjected to a tensile force. Approximately halfway between two reinforcement members 11, the screen 6 is provided with a parallel to the reinforcement members 11 extending sharp crease 32, which at folding in the screen arrangement 4 contributes to the desired accordion-like way of folding of the screen 6. The supporting device 16 insures that a screen part situated in between two reinforcement members 11 remains at least for the greater part on the inside of the reinforcement members 11. Figure 8 shows, inter alia, a local deformation 33 of a reinforcing member 11 for the sake of clamping screen 6, filler 27 and supporting device 16.

In a further improvement of the present concept of invention, the invention further comprises a screen 6 or fabric 6, in which during or otherwise after fabrication thereof, are incorporated at right angles with any filler 27, tensile loadable, flexible straps 16 over at least nearly the entire fabrication width of the screen, possibly also incorporated,. The straps 16 are in this embodiment e.g. at the point of a filler 27 or otherwise at the location envisaged therefor, either incorporated in the weaving or attached thereto, e.g. by means of a stitching or by means of an adhesive.

The invention is not limited to the examples described hereinbefore, but it also relates to constructions represented in the figures and to all kinds of variations as are feasible according to the following claims.

## Claims

1. Screen arrangement (4), e.g. to cover, with an air permeable screen the ventilation aperture of a ventilation part, moveable between a closed position and an opened position, such as a ventilation panel or window of a building, in particular a greenhouse, of which the screen is provided with at least one elongated reinforcement element, characterized in, that the reinforcement element (11) is produced with an open section (18, 26, 28, 29) showing at least one, largely enclosed room (19, 20), wherein the screeen (6) is at least partly accomodated, and at which the screen and reinforcement element (11) are mutually connected by means of clamping.

2. Screen arrangement (4), according to claim 1, characterized in, that the screen (6) is accomodated in the reinforcement element (11) by co-clamping of a filler (27) such as a monofilament

3. Screen arrangement (4), according to claim 2, characterized in, that the screen (6), as seen in cross section, is accomodated in the room (19, 20) such that it is situated between the filler (27) and the inner wall of the reinforcement element (11).

4. Screen arrangement (4), according to claim 1, 2 or 3, characterized in, that the reinforcement element (11) is formed by an open profile (18, 29) which in cross-section shows the contours of two largely enclosed rooms (19, 20).

5. Screen arrangement (4), according to any of the preceding claims, characterized in, that the reinforcement element (11), as seen in plan view, are U-shaped, and in that the corners thereof are formed by connecting elements (31).

6. Screen arrangement (4), according to any of the preceding claims, characterized in, that the clamping in of a screen is at least partly realized through local deformation (33), such as a pinching of the profile (18, 26, 28, 29).

7. Screen arrangement (4), in particular according to any of the preceding claims, e.g. to cover, with an air permeable screen the ventilation aperture of a ventilation part, moveable between a closed position and an opened position, such as a ventilation panel or window of a building, in particular a greenhouse, of which the screen (6) is provided with at least two essentially parallel, elongated reinforcement elements (11), wherein at least two reinforcement elements (11), provided at the outer side of the screen (6), are mutually connected by means of at least one flexible, tensile loadable intermediate element (16) such as a strap, of smaller length than that of the screen part between two reinforcement elements (11), measured transverse to the longitudinal direction of a reinforcement element (11).

8. Screen arrangement (4) according to claim 7, characterized in that the intermediate element (16) is provided with a sharp crease halfway between two reinforcement elements (11), in particular such that the crease makes an inwardly directed V-shape relative to the arrangement (4).

9. Screen arrangement (4) according to claim 6 or 7, characterized in that the intermediate element (16) is a strap having the shape of a circular loom fabric, in particular having a herringbone pattern, and more in particular, showing at least one widthwise repetition of the pattern.

10. Fine meshed netting fabric (6), in particular according to any of the preceding claims or for use in a screen arrangement (4) as claimed therein, intended for application as insect screen (6), as at the insect impermeable surrounding of ventilation apertures in buildings, in particular greenhouses, characterized in that the fabric (6) comprises at least one thread (27) preferably a monofilament applicable as filling body, of considerable greater thickness than the fabric parts surrounding the thread (27).

11. Netting fabric (6), according to claim 10, characterized in that the fabric is formed as a woven fabric, and the thread (27) is woven with the fabric, preferably in the longitudinal direction thereof.

12. Netting fabric (6) according to claim 10 or 11, characterized in that the length of the thread (27), measured in the longitudinal direction thereof, corresponds to the length of the relevant fabric part.

13. Netting fabric (6), particularly as defined in any of the preceding claims, intended for application as insect screen, such as at the insect proof surrounding of a ventilation aperture in buildings, in particular greenhouses, characterized in that the fabric comprises at least one strap (16), preferably included transversely relative to the longitudinal direction of the fabric (6).

14. Netting fabric (6) according to any of the claims 10-13, characterized in that predominantly at one side of the fabric (6) a filler (27) is incorporated or attached, and in the transverse direction thereof, predominantly the other side of the fabric (6), a strap (16), e.g. as according to claim 7, is included.

15. Screen arrangement (4) provided with a netting fabric (6) according to any of the claims 10-14.

16. Constructional element (11) suitable for application as defined in any of the claims 1-9, or 15.

17. Greenhouse or building, provided with a screen arrangement (4) or fabric (6) or constructional element (18, 26, 28, 29) as indicated in any of the relevant preceding claims.
